# EUROPÄISCHE PATENTSCHRIFT

(11) **EP 3 041 887 B1**
(45) Veröffentlichungstag und Bekanntmachung des Hinweises auf die Patenterteilung: **20.03.2019**
(21) Anmeldenummer: 14802355.9
(22) Anmeldetag: 13.11.2014
(51) Int. Cl.: D01F 9/12, C08J 5/06, H01B 3/30, H01B 3/47, C08J 5/04

(54) **KOHLENSTOFFFASER-VERSTÄRKTE KUNSTSTOFF-FORMMASSEN**
CARBON FIBER REINFORCED PLASTIC MOLDINGS
MOULES PLASTIQUES RENFORCÉS PAR FIBRES DE CARBONE

(30) Priorität: 21.11.2013 CH 19432013
(43) Veröffentlichungstag der Anmeldung: 13.07.2016
(73) Patentinhaber: EMS-Patent AG, 7013 Domat/Ems (CH)
(72) Erfinder: AEPLI, Etienne, CH-7013 Domat/Ems (CH); LAMBERTS, Nikolai, CH-7402 Bonaduz (CH)
(74) Vertreter: OK pat AG
(86) Internationale Anmeldenummer: PCT/EP2014/074490
(87) Internationale Veröffentlichungsnummer: WO 2015/074945

(56) Entgegenhaltungen:
- EP-A2- 0 459 287
- US-B1- 6 248 262
- FENG NAN ET AL: "Surface modification of recycled carbon fiber and its reinforcement effect on nylon 6 composites: Mechanical properties, morphology and crystallization behaviors", CURRENT APPLIED PHYSICS, Bd. 13, Nr. 9, 20. September 2013 (2013-09-20), Seiten 2038-2050, XP028760758, ISSN: 1567-1739, DOI: 10.1016/J.CAP.2013.09.009
- TONY MCNALLY ET AL: "Recycled carbon fiber filled polyethylene composites", JOURNAL OF APPLIED POLYMER SCIENCE, Bd. 107, Nr. 3, 30. Oktober 2007 (2007-10-30), Seiten 2015-2021, XP055161248, ISSN: 0021-8995, DOI: 10.1002/app.27253
- V A Shelestova ET AL: "The Effect of the Size of Carbon Fibers on the Physicomechanical Properties of Fluvis Composites", Mechanics of Composite Materials, 1. März 2002 (2002-03-01), Seiten 125-130, XP055161368, New York DOI: 10.1023/A:1014929426126 Gefunden im Internet: URL:http://download.springer.com/static/pd f/2/art%3A10.1023%2FA%3A1014929426126.pdf? auth66=1421071660_c3a2d0e180d89e927cc5f482 bc297a20&ext=.pdf [gefunden am 2015-01-12]

## Beschreibung

Die vorliegende Erfindung betrifft Kohlenstofffaser-verstärkte Kunststoff-Formmassen, aus diesen Formmassen hergestellte Formkörper, sowie die Verwendung von Kohlenstofffasern als Zusatzstoff zur Herstellung von Kohlenstofffaser-verstärkten Kunststoff-Formmassen.

Neben ihrer guten thermischen und elektrischen Leitfähigkeit zeichnen sich Kohlenstofffasern (auch Carbonfasern oder seltener Kohlefasern genannt) vor allem durch ihr geringes Gewicht aus. Kohlenstofffasern haben einen Durchmesser im Bereich von 2 bis 10 µm und werden meist auf der Basis von Polyacrylnitril (PAN) hergestellt. Kohlenstofffaser-verstärkte Kunststoffe (auch bekannt unter der Abkürzung CFK) finden wegen des erwähnten geringen Gewichts und wegen ihrer hervorragenden mechanischen Eigenschaften Einsatz im Leichtbau, wie z.B. für die Luft- und Raumfahrt oder für Sportgeräte. Kohlenstofffasern werden in unbeschichteter oder oft in beschichteter Form eingesetzt. Eine Beschichtung soll mit der Kunststoffmatrix gut verträglich sein, um eine gute Einbettung und Adhäsion und damit eine gute Verstärkungswirkung zu gewährleisten. Neben der Verstärkung verleihen die Kohlenstofffasern den Kunststoffen auch eine für viele Anwendungen gewünschte elektrische Leitfähigkeit bzw. antistatische Eigenschaften.

EP 0 459 287 A2 offenbart eine spezielle Kohlenstofffaser, deren Oberfläche mit einem Copolymer aus einer Diaminverbindung, einer Dicarbonsäureverbindung und einem Glycidylpolyalkylenoxidderivat beschichtet ist. Ausserdem werden mit diesen Fasern verstärkte Harze beschrieben, die eine hohe Festigkeit und eine gute elektrische Leitfähigkeit aufweisen. Mit dem hier beschriebenen Copolymer für die Oberflächenbeschichtung der Kohlenstofffasern konnte die elektrische Leitfähigkeit der Formmasse im Vergleich zu Oberflächenbeschichtungen mit anderen Polymeren noch weiter erhöht werden.

US 6,248,262 B1 offenbart Kohlenstofffaser-verstärkte thermoplastische Formmassen mit verbesserter elektrischer Leitfähigkeit, d.h. niedrigem spezifischem Volumenwiderstand, gegen statische Aufladung. Die hier verwendeten Kohlenstofffasern wurden mit verschiedenen polymeren Bindemitteln beschichtet, z.B. mit Epoxidharz oder einem Polyamid-Terpolymer.

Von N. Feng et al. (*) wird eine Nylon-6 Formmasse beschrieben, die mit recycelten Kohlenstofffasern (RCF) verstärkt ist. Jene RCF stammen aus einem thermooxidativen Recyclingverfahren. Die RCF wurden mit dem Kopplungsmittel «Diglycidylether von Bisphenol A» (DGEBA) mit einem Molekulargewicht von 1507 g/mol beschichtet. Es sind keine spezifischen elektrischen Widerstände angegeben. (*) Nan Feng, Xiadong Wang, Dezhen Wu: «Surface modification of recycled carbon fiber and its reinforcement effect on nylon 6 composites: Mechanical properties, morphology and crystallization behaviors», Current Applied Physics 13 (2013) 2038-2050.

T. McNally et al. (**) beschreiben Polyethylen-Formmassen mit recycelten Kohlenstofffasern. Diese Kohlenstofffasern wurden mit einem thermochemischen Recyclingprozess gewonnen. Die Fasern wurden unbeschichtet («unsized») verwendet und auf eine nominale Länge von 250 µm gemahlen. (**) Tony McNally et al.: «Recycled Carbon Fiber Filled Polyethylene Composites», Journal of Applied Polymer Science, Vol. 107 (2007), 2015-2021.

Von V.A. Shelestova et al. (***) wurde anhand von mit Kohlenstofffasern gefüllten Fluorpolymer-Formmassen der Einfluss der Kohlenstofffaser-Länge auf verschiedene Eigenschaften untersucht. Die Kohlenstofffasern wurden dazu gemahlen und in verschieden kurze Längenfraktionen separiert. Das Maximum in der Kompressionskurve und im spezifischen Volumenwiderstand der Fluorpolymer-Formmassen resultierte aus der Längenfraktion kleiner als 50 µm. (***) V.A. Shelestova, V.V. Serafimovich: «The Effect of the Size of Carbon Fibers on the Physicomechanical Properties of Fluvis Composites», Mechanics of Composite Materials, Vol. 38, No. 2 (2002), 125-130. Elektrische Leitfähigkeit spielt beispielsweise eine Rolle zur antistatischen Ausrüstung von Kunststoffteilen im Kraftstoffsystem von Automobilen. Durch fliessenden Kraftstoff kann es zu elektrostatischer Aufladung kommen und die Gefahr der Entzündung des Kraftstoffes besteht. Dieses Problem kann durch die antistatische Ausrüstung der Kraftstoff-berührenden Kunststoffteile durch elektrisch leitfähige Additive wie Kohlenstofffasern ausgeräumt werden.

Für gewisse andere Anwendungen, wie z.B. bei der Übertragung elektromagnetischer Wellen, ist die elektrische Leitfähigkeit der Kohlenstofffasern jedoch hinderlich, weil sich daraus eine elektromagnetische Abschirmung ergibt. Kohlenstofffaser-verstärkte Kunststoffe sind darum nur bedingt für den Einsatz in mobilen Kommunikationsgeräten geeignet. Eine Möglichkeit den erwähnten Nachteil der Kohlenstofffasern zu umgehen beschreibt die US 2009/0130995 A1. Dort wird eine spezielle Gehäusestruktur offenbart, die einen Kohlenstofffaser-verstärkten Gehäuseteil und einen Teil mit einer nicht-leitenden Faser, wie z.B. einer Glasfaser, aufweist. Der Teil des Gehäuses unter dem sich die Antenne befindet, wird dabei mit einer nicht-leitenden Faser verstärkt. Die in der US 2009/0130995 A1 beschriebene Lösung bringt die Nachteile eines komplizierten Herstellungs- und Montageverfahrens und eines höheren Gewichts mit sich.

Somit ergab es sich als Aufgabe der vorliegenden Erfindung, Kohlenstofffaser-verstärkte Kunststoff-Formmassen mit guten mechanischen Eigenschaften bereitzustellen, die entgegen dem Stand der Technik nur eine geringe elektrische Leitfähigkeit aufweisen und unter anderem für den Einsatz in mobilen Kommunikationsgeräten auch im Antennenbereich geeignet sind.

Diese Aufgabe wird gemäss der vorliegenden Erfindung durch eine Kunststoff-Formmasse mit folgender Zusammensetzung bzw. Merkmalen gelöst:
(a) 49 bis 97 Gew.-% mindestens eines eine Matrix bildenden Kunststoffs A,
(b) 3 bis 40 Gew.% mindestens einer mit mindestens einem Kunststoff B beschichteten Kohlenstofffaser,
(c) 0 bis 48 Gew.-% mindestens eines weiteren Zusatzstoffs C,
   wobei sich die Komponenten (a) bis (c) auf 100 Gew.-% ergänzen,
   wobei die Formmasse einen spezifischen Oberflächenwiderstand von 1*10⁹ bis 1*10¹⁶ Ohm und einen spezifischen Volumenwiderstand von 1*10¹ bis 1*10¹⁴ Ohm*m, beides bestimmt nach der Norm IEC 60093, aufweist.

Kunststoff A ist der Kunststoff der Komponente (a). Kunststoff B ist der Kunststoff der Beschichtung der Komponente (b). Kunststoff A und Kunststoff B können gleich oder unterschiedlich sein.

Weitere kennzeichnende Merkmale der erfindungsgemässen Kunststoff-Formmasse sind:
- dass die Kohlenstofffaser der Komponente (b) ausgewählt ist aus der Gruppe bestehend aus recycelten Kohlenstofffasern und Kohlenstofffasern auf Zellulosebasis,
- dass die Kohlenstofffaser der Komponente (b) eine durchschnittliche Länge im Bereich zwischen 50 und 200 µm aufweist,
- dass der mindestens eine Kunststoff (B) der Kohlenstofffaser-Beschichtung ausgewählt ist aus einer Gruppe bestehend aus Polyamiden, insbesondere Copolyamiden, Polyestern, insbesondere Copolyestern, Polyurethanen, Epoxidharzen, Polyhydroxyethern, Acryl-Copolymeren, und Mischungen oder übereinanderliegenden Schichten aus zwei oder mehreren dieser Kunststoffe,
- und dass der mindestens eine Kunststoff (A) der Komponente (a) ein Thermoplast ausgewählt aus der Gruppe bestehend aus Acetalharzen, flüssigkristallinen Polymeren, Polyacrylaten, Polymethacrylaten, olefinischen und cycloolefinischen Polymeren, Polyamiden, Polyamidelastomeren, insbesondere Polyesteramiden, Polyetheramiden und Polyetheresteramiden, Polyamidimiden, Polyethern, Polyarylethern beeinhaltend Polyphenylether, Polyhydroxyethern, Polycarbonaten, Polysulfonen, Polyetherimiden, Polyimiden, Polyestern, Polyester-Polycarbonaten, Polyoxyethylenen, Polystyrolen, Styrol-Copolymeren, Polysulfonen, vinylischen Polymeren wie Polyvinylchlorid und Polyvinylacetat, und Mischungen oder Blends aus zwei oder mehreren der aufgezählten Thermoplaste, oder ein Duroplast ausgewählt aus der Gruppe bestehend aus Melaminharzen, Phenoplasten, Polyesterharzen, Aminoplasten, Epoxidharzen, Polyurethanen, vernetzten Polyacrylaten, und Mischungen oder Blends aus zwei oder mehreren der genannten Duroplaste ist.

Bevorzugte Ausführungsformen der erfindungsgemässen Kunststoff-Formmasse ergeben sich aus den abhängigen Ansprüchen. Zudem wird die Verwendung entsprechender Kohlenstofffasern als Zusatzstoff bei der Herstellung von Kohlenstofffaser-verstärkten Kunststoff-Formmassen beansprucht.

Die in der erfindungsgemässen Kunststoff-Formmasse als Komponente (b) enthaltene Kohlenstofffaser ist mit mindestens einem Kunststoff B beschichtet, welcher vorzugsweise ausgewählt ist aus einer Gruppe bestehend aus Acryl-Copolymeren.

Eine Kunststoff-Beschichtung der Kohlenstofffasern hat zum einen eine gewisse isolierende Wirkung und kann im Vergleich zu unbeschichteten Kohlenstofffasern zu einer geringeren elektrischen Leitfähigkeit entsprechender Kunststoff-Formmassen beitragen. Zum anderen hat die Beschichtung bei der Einarbeitung der Kohlenstofffaser in die Kunststoff-Formmasse einen Einfluss auf die erhaltene Faserlänge. Eine Beschichtung führt zu einer steiferen Kohlenstofffaser. Diese weist nach der Compoundierung eine geringere Länge auf als eine unbeschichtete und damit flexiblere Faser, die den bei der Verarbeitung einwirkenden Kräften besser widersteht.

In einer bevorzugten Ausführungsform sind Copolymere aus einem Diamin, einer Dicarbonsäure und einem Glycidyl-Polyalkylenoxid-Derivat als Kunststoff B ausgeschlossen.

In einer besonderen Ausführungsform sind Polymerisate des Propylens als Kunststoff A ausgeschlossen.

Wird der mindestens eine Kunststoff A aus den Polyamiden ausgewählt, so ist das mindestens eine Polyamid bevorzugt ausgewählt aus der Gruppe bestehend aus PA 6; PA 46; PA 66; PA 66/6; PA 610; PA 612; PA 1010; PA 11; PA 12; PA MXD6; PA MXD10; PA MACM12; PA PACM12; PA 6T/6I; PA 6T/66; PA 6T/612; PA 6T/1012; PA 4T; PA 9T; PA 10T; PA 12T; PA 10/6T; PA 6T/6I/66; PA 11/10T; PA 12/10T; PA 610/10T; PA 612/10T; PA 1010/10T; PA 1012/10T; PA 1212/10T; PA 11/10T/12; PA 11/10T/6; PA 12/10T/6; PA 11/10T/10I; PA 11/10T/106; PA 12/10T/10I; PA 12/10T/106; Polyamide auf Basis einer Mischung aus Hexamethylendiamin und 2-Methyl-Pentamethylendiamin als Diaminkomponente und Terephthalsäure als Dicarbonsäurekomponente; Polyamide deren Diaminbaustein 4,4'-Diamino-cyclohexylmethan, 3,3'-Dimethyl-4,4'-diaminocyclohexylmethan, Cyclohexyldiamin, oder 2,2',6,6'-Tetramethyl-4,4'-methylenbis-(cyclohexylamin) ist, und Mischungen oder Blends aus zwei oder mehreren dieser Polyamide.

An dieser Stelle soll die Anmerkung gemacht werden, dass der Begriff "Polyamid" ein Oberbegriff ist, der Homopolyamide und Copolyamide sowie Mischungen davon umfasst. Die Schreibweisen und Abkürzungen für Polyamide und deren Monomere sind in der ISO-Norm 1874-1:1992(E) festgelegt.

Die Struktur der Kohlenstofffasern selbst hat auch einen Einfluss auf die elektrische Leitfähigkeit. Zum Erreichen einer geringen elektrischen Leitfähigkeit einer erfindungsgemässen Kunststoff-Formmasse trägt erfindungsgemäss auch die Verwendung von Kohlenstofffasern mit einer bevorzugt wenig perfekten inneren Struktur bei. Unter einer wenig perfekten inneren Struktur ist dabei unter anderem zu verstehen, dass Störungen in der Delokalisierung der Elektronen über die komplette Struktur, wie z.B. durch Unterbrüche eines konjugierten Doppelbindungssystems durch partielle Hydrierung, vorliegen. Unter den extremen Reaktionsbedingungen beim Recyclen von Kohlenstofffasern aus Kohlenstofffaser-enthaltenden Kunststoffen, besonders wenn ein Pyrolyseschritt enthalten ist, können Störungen der perfekten inneren Struktur hervorgerufen werden. In dieser Hinsicht wird die Kohlenstofffaser der Komponente (b) ausgewählt aus der Gruppe bestehend aus recycelten Kohlenstofffasern und Kohlenstofffasern auf Zellulosebasis, wobei recycelte Kohlenstofffasern bevorzugt sind. Ein Recyclingverfahren zur Rückgewinnung von Kohlenstofffasern aus CFK-Produktions- und CFK-Bauteil-Abfällen ist z.B. beschrieben in der WO 2009/135486 A1.

Der Anteil der Kohlenstofffaser beträgt in den erfindungsgemässen Kunststoff-Formmassen bevorzugt 4 bis 35 Gew.-%, besonders bevorzugt 5 bis 30 Gew.-% und ganz besonders bevorzugt 6 bis 25 Gew.-%.

Der für die Beschichtung der Kohlenstofffaser verwendete mindestens eine Kunststoff B macht bevorzugt 0.1 bis 10 Gew.-%, besonders bevorzugt 0.5 bis 5 Gew.-% und ganz besonders bevorzugt 1 bis 2 Gew.-% bezogen auf die Gesamtmasse der beschichteten Kohlenstofffaser aus.

Des weiteren weist für eine erfindungsgemässe Kunststoff-Formmasse die Kohlenstofffaser der Komponente (b) eine durchschnittliche Länge im Bereich zwischen 50 und 200 µm auf. Auch solche sehr kurzen Kohlenstofffasern tragen erfindungsgemäss zu einer geringen elektrischen Leitfähigkeit bei, weil sich solche in der Kunststoff-Formmasse dispergierten Carbon-Kurzfasern nur an wenigen Stellen berühren und somit nur wenige elektrische Leitungswege in der Formmasse bilden.

Die Anzahl der Berührungspunkte der Kohlenstofffasern untereinander wird nicht alleine durch die Faserlänge bestimmt. Auch der Anteil der Kohlenstofffaser in der Formmasse, also der Füllgrad, hat einen wesentlichen Einfluss darauf. Je geringer der Füllgrad und je geringer die Faserlänge, desto weniger Berührungspunkte liegen vor. Dies ist im Sinne der vorliegenden Erfindung bevorzugt.

Trotzdem sind eine gute Einbettung und Verankerung sowie die mechanische Verstärkungswirkung in der Matrix der Kunststoff-Formmasse immer noch vorhanden.

Erfindungsgemäss werden die Einflussfaktoren für eine geringe Leitfähigkeit kombiniert, um hohe spezifische Widerstände zu erreichen.

Bevorzugt weist eine erfindungsgemässe Kunststoff-Formmasse einen spezifischen Oberflächenwiderstand von 1*10¹⁰ bis 1*10¹⁴ Ohm auf. Der spezifische Volumenwiderstand einer erfindungsgemässen Kunststoff-Formmasse beträgt bevorzugt 1*10⁸ bis 1*10¹² Ohm*m.

Vorzugsweise ist der mindestens eine weitere Zusatzstoff C der Komponente (c) der erfindungsgemässen Kunststoff-Formmasse ausgewählt aus einer Gruppe, die aus UV-Absorbern, UV-Stabilisatoren, Hitzestabilisatoren, Hydrolysestabilisatoren, Vernetzungsaktivatoren, Vernetzungsmitteln, Flammschutzmitteln, Schichtsilikaten, Füllstoffen, Farbmitteln, Verstärkungsmitteln, Haftvermittlern, Schlagzähigkeitsmodifikatoren, Gleitmitteln, Glaskugeln, Glasfasern, Mineralpulvern, Gleit- und Entformungshilfsmitteln, anorganischen Pigmenten, organischen Pigmenten, IR-Absorbern, Antistatika, Antiblockmitteln, Nukleierungsmitteln, Kristallisationsbeschleunigern, Kristallisationsverzögerern, kettenverlängernden Additiven, optischen Aufhellern, photochromen Additiven, und Mischungen von zwei oder mehreren dieser Zusatzstoffe besteht. Der Anteil des mindestens einen weiteren Zusatzstoffs C beträgt bevorzugt 0.01 bis 45 Gew.-%, besonders bevorzugt 0.5 bis 35 Gew.-% und ganz besonders bevorzugt 1.0 bis 20 Gew.-%.

Das Vorhandensein der mechanischen Verstärkungswirkung der Kohlenstofffasern in der erfindungsgemässen Kunststoff-Formmasse ist daran feststellbar, dass die Reissdehnung im trockenem Zustand bestimmt nach ISO 527 bevorzugt 0.7 bis 6.0 %, besonders bevorzugt 1.0 bis 5.0 % und ganz besonders bevorzugt 1.3 bis 3.0 % beträgt.

Erfindungsgemässe Formkörper bestehen zumindest bereichsweise aus einer erfindungsgemässen Kunststoff-Formmasse, und liegen bevorzugt in Form eines Bauteils für den Elektro/Elektronikbereich, insbesondere für Teile von Leiterplatten, Gehäusen, Folien, Leitungen, Schaltern, Verteilern, Relais, Widerständen, Kondensatoren, Spulen, Lampen, Dioden, LED, Transistoren, Konnektoren, Reglern, Speichern und Sensoren und Gehäusen- oder Gehäuseteilen von Mobiltelefonen, Smart Phones, Tablet-PC's, Laptops, Notebooks und Netbooks vor.

Erfindungsgemäss ist auch die Verwendung von mit mindestens einem Kunststoff beschichteten Kohlenstofffasern, die ausgewählt sind aus der Gruppe bestehend aus recycelten Kohlenstofffasern und Kohlenstofffasern auf Zellulosebasis, als Zusatzstoff bei der Herstellung von Kunststoff-Formmassen, mit einer durchschnittlichen Länge der Kohlenstofffasern in den Kunststoff-Formmassen im Bereich zwischen 50 und 200 µm, wobei diese Kunststoff-Formmassen einen spezifischen Volumenwiderstand von 10⁷ bis 10¹⁴ Ohm*m, bevorzugt von 10⁸ bis 10¹² Ohm*m bestimmt nach IEC 60093 aufweisen, oder zur Herstellung von Formkörpern aus diesen Kunststoff-Formmassen, wobei der mindestens eine Kunststoff der Kohlenstofffaser-Beschichtung ausgewählt ist aus einer Gruppe bestehend aus Polyamiden, insbesondere Copolyamiden, Polyestern, insbesondere Copolyestern, Polyurethanen, Epoxidharzen, Polyhydroxyethern, Acryl-Copolymeren, und Mischungen oder übereinanderliegenden Schichten aus zwei oder mehreren dieser Kunststoffe, und wobei die Kunststoff-Formmassen eine Matrix umfassen gebildet aus mindestens einem Kunststoff, der ein Thermoplast ausgewählt aus der Gruppe bestehend aus Acetalharzen, flüssigkristallinen Polymeren, Polyacrylaten, Polymethacrylaten, olefinischen und cycloolefinischen Polymeren, Polyamiden, Polyamidelastomeren, insbesondere Polyesteramiden, Polyetheramiden und Polyetheresteramiden, Polyamidimiden, Polyethern, Polyarylethern beeinhaltend Polyphenylether, Polyhydroxyethern, Polycarbonaten, Polysulfonen, Polyetherimiden, Polyimiden, Polyestern, Polyester-Polycarbonaten, Polyoxyethylenen, Polystyrolen, Styrol-Copolymeren, Polysulfonen, vinylischen Polymeren wie Polyvinylchlorid und Polyvinylacetat, und Mischungen oder Blends aus zwei oder mehreren der aufgezählten Thermoplaste, oder ein Duroplast ausgewählt aus der Gruppe bestehend aus Melaminharzen, Phenoplasten, Polyesterharzen, Aminoplasten, Epoxidharzen, Polyurethanen, vernetzten Polyacrylaten, und Mischungen oder Blends aus zwei oder mehreren der genannten Duroplaste ist. In einer bevorzugten Ausführungsform sind Copolymere aus einem Diamin, einer Dicarbonsäure und einem Glycidyl-Polyalkylenoxid-Derivat als Beschichtung ausgeschlossen.

Die vorliegende Erfindung wird anhand der nachfolgenden Beispiele, welche die Erfindung illustrieren, nicht aber den Erfindungsumfang einschränken sollen, näher dargestellt.

Die in Tabelle 1 aufgeführten Materialien wurden in den Beispielen und Vergleichsbeispielen eingesetzt.

**Tabelle 1: Eingesetzte Materialien.**

| Stoff | Handelsname | Hersteller | rel. Viskosität | H₂O-Gehalt [Gew.-%] |
|---|---|---|---|---|
| PA 66 | RADIPOL A40 | Radici (IT) | 2.50^{a)} | 0.04 |
| PA 612 | GRIVORY XE 1291 | EMS-GRIVORY (CH) | 1.82^{b)} | 0.04 |
| PA 6T/66 (55:45) | GRIVORY XE 3774 | EMS-GRIVORY (CH) | 1.69^{b)} | 0.08 |
| PA 6T/6I (1:2) | GRIVORY G21 | EMS-GRIVORY (CH) | 1.51^{b)} | 0.04 |
| Kaolin | Burgess 221 | Burgess Pigment Company | - | - |
| Schlagzähmodifikator | Tafmer MC201 | Mitsui (JP) | - | - |
| Stabilisator 1 | Irganox 1098 | BASF (DE) | - | - |
| Stabilisator 2 | Hostanox PAR24 | Clariant (CH) | - | - |
| Calciumcarbonat | Socal 31 | Solvay (AT) | - | - |
| Kohlenstofffaser 1^{c)} | CF TENAX E-HT C604 6MM | Toho Tenax (DE) | - | - |
| Kohlenstofffaser 2^{d)} | • CarboNXT Fiberball 100 | CFK Valley Stade Recycling GmbH (DE) | - | - |
| Kohlenstofffaser 3^{d)} | • CarboNXT Fiberball 6000 | CFK Valley Stade Recycling GmbH (DE) | - | - |
| Glasfaser | GF Vetrotex 995 EC10-4.5 | OCV (FR) | - | - |

| | | | | |
|---|---|---|---|---|
| a) Bestimmt nach ISO 307 (1.0 g Polyamid gelöst in 100 ml H₂SO₄), Berechnung der relativen Viskosität (RV) nach RV = t/t₀ in Anlehnung an Abschnitt 11 der Norm; b) Bestimmt nach ISO 307 (0.5 g Polyamid gelöst in 100 ml m-Kresol), Berechnung der relativen Viskosität (RV) nach RV = t/t₀ in Anlehnung an Abschnitt 11 der Norm; c) Unbeschichtete Kohlenstofffaser auf PAN-Basis, plasmabehandelt; d) Beschichtet mit 1.6 Gew.-% (bezogen auf die Gesamtmasse der Kohlefaser und der Beschichtung) des acrylischen Copolymers Carboset® 515 | | | | |

### Compoundierung

Generell werden zur Herstellung der Kunststoff-Formmasse die Komponenten auf üblichen Compoundiermaschinen, wie z.B. ein- oder zweiwelligen Extrudern oder Schneckenknetern, in der Polymerschmelze gemischt (compoundiert). Die Komponenten werden dabei einzeln in den Einzug dosiert oder in Form eines Dryblends zugeführt. Werden Zusatzstoffe (Additive) verwendet, können diese direkt oder in Form eines Masterbatches eingebracht werden. Bei einer Dryblend-Herstellung werden die getrockneten Polymer-Granulate und die Zusatzstoffe vermischt. Zur Vermeidung der Feuchtigkeitsaufnahme kann das Mischen unter getrocknetem Schutzgas erfolgen.

Die Compoundierung erfolgt bei eingestellten Extruder-Zylindertemperaturen von z.B. 230 °C bis 350 °C. Vor der Düse kann Vakuum angelegt oder atmosphärisch entgast werden. Die Schmelze wird in Strangform in ein Wasserbad ausgetragen und granuliert. Bevorzugt wird zum Granulieren eine Unterwassergranulierung oder ein Heissabschlag verwendet. Die somit bevorzugt in Granulatform erhaltene Kunststoff-Formmasse wird anschliessend getrocknet und kann nachher zu Formkörpern weiterverarbeitet werden.

Die Formmassen für die erfindungsgemässen Beispiele B1, B2 und B3 sowie für die Vergleichsbeispiele VB1, VB2 und VB3 wurden auf einem Zweiwellenextruder der Fa. Berstorff Typ ZE 40Ax33D UT hergestellt. Es wurden die in Tabelle 2 angegebenen Mengenanteile der Ausgangsstoffe in Gewichtsprozent (Gew.-%) bezogen auf 100 Gew.-% der gesamten Formmasse im Zweiwellenextruder compoundiert. Aus dem erhaltenen Granulat wurden Probekörper gespritzt, an denen die in Tabelle 2 angegebenen Eigenschaften bestimmt wurden.

### Normen zur Bestimmung der mechanischen Daten und der elektrischen Leitfähigkeitseigenschaften

Die in Tabelle 2 angegebenen mechanischen Daten und Leitfähigkeitseigenschaften (letztere ausgedrückt durch den elektrischen Widerstand, der sich umgekehrt proportional zur Leitfähigkeit verhält) wurden nach den folgenden Normen bestimmt.

### Zug-E-Modul:

ISO 527 mit einer Zuggeschwindigkeit von 1 mm/min
ISO-Zugstab, Norm: ISO 3167, Typ A, 170 x 20/10 x 4 mm, Temperatur 23 °C.

### Reissfestigkeit und Reissdehnung:

ISO 527 mit einer Zuggeschwindigkeit von 5 mm/min
ISO-Zugstab, Norm: ISO 3167, Typ A, 170 x 20/10 x 4 mm, Temperatur 23°C.

### Charpy-Schlagzähigkeit und Charpy-Kerbschlagzähigkeit:

ISO 179-2/1eU (Charpy-Schlagzähigkeit)
ISO-Schlagstab, Norm: ISO 179-1, Typ 1, 80 x 10 x 4 mm, Temperatur 23°C.

### Reissdehnung:

ISO 527 mit einer Zuggeschwindigkeit von 5 mm/min
ISO-Zugstab, Norm: ISO 3167, Typ A, 170 x 20/10 x 4 mm, Temperatur 23°C.

### Spezifischer (elektrischer) Volumenwiderstand:

(auch spezifischer Durchgangswiderstand genannt, in [Ohm*m]) IEC 60093
Platten 100*100*2mm mit Leitsilber kontaktiert

### Spezifischer (elektrischer) Oberflächenwiderstand:

(wegen der Elektrodenanordnung auch als Ω square bezeichnet, in [Ohm]) IEC 60093
Platten 100*100*2mm mit Leitsilber kontaktiert

### Versuche:

In der nachfolgenden Tabelle 2 sind die Zusammensetzungen der Formmassen der durchgeführten Versuche und die Messresultate dargestellt (B=erfindungsgemässe Beispiele, VB=Vergleichsbeispiele).

**Tabelle 2: Zusammensetzungen und Resultate.**

| **Beispiele** | **B1** | **VB1** | **B2** | **VB2** | **B3** | **VB3** |
|---|---|---|---|---|---|---|
| PA 66 | - | - | 37.25 | 37.25 | - | - |
| PA 612 | 35.75 | 35.75 | - | - | - | - |
| PA 6T/66 (55:45) | - | - | - | - | 70.00 | 69.00 |
| PA 6T/6I (1:2) | 14.00 | 14.00 | 12.50 | 12.50 | - | - |
| Schlagzähmodifikator | - | - | - | - | 5.50 | 5.50 |
| Stabilisator 1 | 0.25 | 0.25 | 0.25 | 0.25 | 0.15 | 0.15 |
| Stabilisator 2 | - | - | - | - | 0.20 | 0.20 |
| Kaolin | - | - | - | - | 0.15 | 0.15 |
| Calciumcarbonat | 40.0 | 40.0 | 40.0 | 40.0 | - | - |
| Kohlenstofffaser 1 | - | 10.0 | - | 10.0 | - | 15.0 |
| Kohlenstofffaser 2 | 10.0 | - | 10.0 | - | - | - |
| Kohlenstofffaser 3 | - | - | - | - | 24.0 | - |
| Glasfaser | - | - | - | - | - | 10.0 |
| Reissdehnung trocken [%] | 1.7 | 1.9 | 1.4 | 1.5 | 2.8 | 2.9 |
| Spez. Volumenwiderstand [Ohm*m] | 4.0*10⁹ | 1.6*10² | 5.4*10⁹ | 4.5*10¹ | 2.2*10⁹ | 5.5*10¹ |
| Spez. Oberflächenwiderstand [Ohm] | 3.3*10¹¹ | 7.2*10³ | 1.0*10¹¹ | 1.3*10³ | 1.1*10¹¹ | 2.0*10³ |

Die Erfindungsbeispiele B1, B2 und B3 zeigen im Vergleich zu den entsprechenden Vergleichsbeispielen VB1, VB2 und VB3, bei welchen eine unbeschichtete 6 mm lange Kohlenstofffaser eingesetzt wurde, einen jeweils in der Grössenordnung um einen Faktor 10⁷ bis 10⁸ höheren spezifischen Widerstand an Probekörpern aus den Kunststoff-Formmassen, sowohl an der Oberfläche als auch im Volumen. Ein Unterschied um derart viele Zehnerpotenzen ist enorm und völlig unerwartet angesichts dessen, dass im Stand der Technik (z.B. in der eingangs zitierten EP 0 459 287 A2) auch bei Kunststoff-Formmassen mit Polymer-beschichteten Kohlenstofffasern über gute elektrische Leitfähigkeit berichtet wurde. Die mit den Beispielen erreichten hohen spezifischen Widerstände liegen alle im erfindungsgemäss bevorzugten Bereich, weit über den bisher bekannten Werten für Kohlenstofffaser-verstärkte Kunststoff-Formmassen, und schon fast in der Nähe von Kohlenstofffaser-freien Kunststoff-Formmassen. Ebenso erstaunlich ist, dass andererseits die mechanische Verstärkungswirkung durch die Kohlenstofffasern in der Kunststoff-Formmasse nach wie vor vorhanden ist, was man an den gemessenen Reissdehnungswerten sieht, die bei den Erfindungsbeispielen ungefähr gleich gross oder nur ein bisschen kleiner als bei den Vergleichsbeispielen sind. Die Reissdehnungswerte liegen im erfindungsgemäss bevorzugten Bereich, und entsprechen bei den Beispielen B1 und B2 sogar ziemlich genau dem Reissdehnungswert (auch Bruchdehnung genannt) von reinen Kohlenstofffasern, der ca. 1.5 % beträgt. Das heisst dass auch in den Erfindungsbeispielen die mechanische Hauptlast nach wie vor von den Kohlenstofffasern getragen wird.

Mit der vorliegenden Erfindung können zur völligen Überraschung des Fachmanns Kohlenstofffaser-verstärkte Kunststoff-Formmassen bereitgestellt werden, die sich im Gegensatz zum Stand der Technik durch einen sehr hohen elektrischen Widerstand, d.h. durch eine geringe elektrische Leitfähigkeit auszeichnen, aber trotzdem gute mechanische Eigenschaften aufweisen. Es konnten zwei bisher miteinander verbundene Eigenschaften entkoppelt werden, so dass nun eine verstärkte Leichtgewichtsvariante auch für solche Anwendungen zur Verfügung steht, bei denen keine oder nur eine geringe elektrische Leitfähigkeit vorkommen soll. Damit kann die Palette der Kunststoff-Formmassen um eine interessante Variante erweitert werden. So lassen sich jetzt z.B. Gehäuse für mobile Geräte mit eingebauter Antenne aus einem einzigen, Kohlenstofffaser-verstärkten Kunststoff herstellen und müssen nicht mehr zweiteilig konzipiert werden.

## Patentansprüche

1. Kunststoff-Formmasse mit folgender Zusammensetzung:
(a) 49 bis 97 Gew.-% mindestens eines eine Matrix bildenden Kunststoffs (A),
(b) 3 bis 40 Gew.-% mindestens einer mit mindestens einem Kunststoff (B) beschichteten Kohlenstofffaser,
(c) 0 bis 48 Gew.-% mindestens eines weiteren Zusatzstoffs (C),
wobei sich die Komponenten (a) bis (c) auf 100 Gew.-% ergänzen,
**dadurch gekennzeichnet, dass** die Kohlenstofffaser der Komponente (b) ausgewählt ist aus der Gruppe bestehend aus recycelten Kohlenstofffasern und Kohlenstofffasern auf Zellulosebasis,
**dass** die Kohlenstofffaser der Komponente (b) eine durchschnittliche Länge im Bereich zwischen 50 und 200 µm aufweist,
**dass** der mindestens eine Kunststoff (B) der Kohlenstofffaser-Beschichtung ausgewählt ist aus einer Gruppe bestehend aus Polyamiden, insbesondere Copolyamiden, Polyestern, insbesondere Copolyestern, Polyurethanen, Epoxidharzen, Polyhydroxyethern, Acryl-Copolymeren, und Mischungen oder übereinanderliegenden Schichten aus zwei oder mehreren dieser Kunststoffe,
**dass** der mindestens eine Kunststoff (A) der Komponente (a) ein Thermoplast ausgewählt aus der Gruppe bestehend aus Acetalharzen, flüssigkristallinen Polymeren, Polyacrylaten, Polymethacrylaten, olefinischen und cycloolefinischen Polymeren, Polyamiden, Polyamidelastomeren, insbesondere Polyesteramiden, Polyetheramiden und Polyetheresteramiden, Polyamidimiden, Polyethern, Polyarylethern beeinhaltend Polyphenylether, Polyhydroxyethern, Polycarbonaten, Polysulfonen, Polyetherimiden, Polyimiden, Polyestern, Polyester-Polycarbonaten, Polyoxyethylenen, Polystyrolen, Styrol-Copolymeren, Polysulfonen, vinylischen Polymeren wie Polyvinylchlorid und Polyvinylacetat, und Mischungen oder Blends aus zwei oder mehreren der aufgezählten Thermoplaste, oder ein Duroplast ausgewählt aus der Gruppe bestehend aus Melaminharzen, Phenoplasten, Polyesterharzen, Aminoplasten, Epoxidharzen, Polyurethanen, vernetzten Polyacrylaten, und Mischungen oder Blends aus zwei oder mehreren der genannten Duroplaste ist,
**und dass** die Kunststoff-Formmasse einen spezifischen Oberflächenwiderstand von 1*10⁹ bis 1*10¹⁶ Ohm und einen spezifischen Volumenwiderstand von 1*10⁷ bis 1*10¹⁴ Ohm*m, beides bestimmt nach IEC 60093, aufweist.

2. Kunststoff-Formmasse gemäss Anspruch 1, **dadurch gekennzeichnet, dass** die Kohlenstofffaser der Komponente (b) mit mindestens einem Kunststoff (B) beschichtet ist, der ausgewählt ist aus Acryl-Copolymeren.

3. Kunststoff-Formmasse gemäss Anspruch 1, **dadurch gekennzeichnet, dass** der mindestens eine Kunststoff (A) mindestens ein Polyamid ist, ausgewählt aus der Gruppe bestehend aus PA 6; PA 46; PA 66; PA 66/6; PA 610; PA 612; PA 1010; PA 11; PA 12; PA MXD6; PA MXD10; PA MACM12; PA PACM12; PA 6T/6I; PA 6T/66; PA 6T/612; PA 6T/1012; PA 4T; PA 9T; PA 10T; PA 12T; PA 10/6T; PA 6T/6I/66; PA 11/10T; PA 12/10T; PA 610/10T; PA 612/10T; PA 1010/10T; PA 1012/10T; PA 1212/10T; PA 11/10T/12; PA 11/10T/6; PA 12/10T/6; PA 11/10T/10I; PA 11/10T/106; PA 12/10T/10I; PA 12/10T/106; Polyamide auf Basis einer Mischung aus Hexamethylendiamin und 2-Methyl-Pentamethylendiamin als Diaminkomponente und Terephthalsäure als Dicarbonsäurekomponente; Polyamide deren Diaminbaustein 4,4'-Diamino-cyclohexylmethan, 3,3'-Dimethyl-4,4'-diaminocyclohexylmethan, Cyclohexyldiamin, oder 2,2',6,6'-Tetramethyl-4,4'-methylenbis-(cyclohexylamin) ist, und Mischungen oder Blends aus zwei oder mehreren dieser Polyamide.

4. Kunststoff-Formmasse gemäss einem der vorhergehenden Ansprüche, **dadurch gekennzeichnet, dass** die Kohlenstofffaser der Komponente (b) eine recycelte Kohlenstofffaser ist.

5. Kunststoff-Formmasse gemäss einem der vorhergehenden Ansprüche, **dadurch gekennzeichnet, dass** der Anteil der Kohlenstofffaser 4 bis 35 Gew.-%, bevorzugt 5 bis 30 Gew.-% und besonders bevorzugt 6 bis 25 Gew.-% beträgt.

6. Kunststoff-Formmasse gemäss einem der vorhergehenden Ansprüche, **dadurch gekennzeichnet, dass** der für die Beschichtung der Kohlenstofffaser verwendete mindestens eine Kunststoff (B) 0.1 bis 10 Gew.-%, bevorzugt 0.5 bis 5 Gew.-% und besonders bevorzugt 1 bis 2 Gew.-% bezogen auf die Gesamtmasse der beschichteten Kohlenstofffaser ausmacht.

7. Kunststoff-Formmasse gemäss einem der vorhergehenden Ansprüche, **dadurch gekennzeichnet, dass** ihr spezifischer Oberflächenwiderstand 1*10¹⁰ bis 1*10¹⁴ Ohm ist.

8. Kunststoff-Formmasse gemäss einem der vorhergehenden Ansprüche, **dadurch gekennzeichnet, dass** ihr spezifischer Volumenwiderstand 1*10⁸ bis 1*10¹² Ohm*m ist.

9. Kunststoff-Formmasse gemäss einem der vorhergehenden Ansprüche, **dadurch gekennzeichnet, dass** der mindestens eine weitere Zusatzstoff (C) der Komponente (c) ausgewählt ist aus einer Gruppe, die aus UV-Absorbern, UV-Stabilisatoren, Hitzestabilisatoren, Hydrolysestabilisatoren, Vernetzungsaktivatoren, Vernetzungsmitteln, Flammschutzmitteln, Schichtsilikaten, Füllstoffen, Farbmitteln, Verstärkungsmitteln, Haftvermittlern, Schlagzähigkeitsmodifikatoren, Gleitmitteln, Glaskugeln, Glasfasern, Mineralpulvern, Gleit- und Entformungshilfsmitteln, anorganischen Pigmenten, organischen Pigmenten, IR-Absorbern, Antistatika, Antiblockmitteln, Nukleierungsmitteln, Kristallisationsbeschleunigern, Kristallisationsverzögerern, kettenverlängernden Additiven, optischen Aufhellern, photochromen Additiven, und Mischungen von zwei oder mehreren dieser Zusatzstoffe besteht.

10. Kunststoff-Formmasse gemäss einem der vorhergehenden Ansprüche, **dadurch gekennzeichnet, dass** der Anteil des mindestens einen weiteren Zusatzstoffs (C) 0.01 bis 45 Gew.-%, bevorzugt 0.5 bis 35 Gew.-% und besonders bevorzugt 1.0 bis 20 Gew.-% beträgt.

11. Kunststoff-Formmasse gemäss einem der vorhergehenden Ansprüche, **dadurch gekennzeichnet, dass** die Reissdehnung in trockenem Zustand bestimmt nach ISO 527 0.7 bis 6.0 %, bevorzugt 1.0 bis 5.0 % und besonders bevorzugt 1.3 bis 3.0 % beträgt.

12. Formkörper, welcher zumindest bereichsweise aus einer Kunststoff-Formmasse nach einem der Ansprüche 1 bis 11 besteht, bevorzugt in Form eines Bauteils für den Elektro/Elektronikbereich, insbesondere für Teile von Leiterplatten, Gehäusen, Folien, Leitungen, Schaltern, Verteilern, Relais, Widerständen, Kondensatoren, Spulen, Lampen, Dioden, LED, Transistoren, Konnektoren, Reglern, Speichern und Sensoren und Gehäusen- oder Gehäuseteilen von Mobiltelefonen, Smart Phones, Tablet-PC's, Laptops, Notebooks und Netbooks.

13. Verwendung von mit mindestens einem Kunststoff beschichteten Kohlenstofffasern, die ausgewählt sind aus der Gruppe bestehend aus recycelten Kohlenstofffasern und Kohlenstofffasern auf Zellulosebasis, als Zusatzstoff bei der Herstellung von Kunststoff-Formmassen, mit einer durchschnittlichen Länge der Kohlenstofffasern in den Kunststoff-Formmassen im Bereich zwischen 50 und 200 µm, wobei diese Kunststoff-Formmassen einen spezifischen Volumenwiderstand von 10⁷ bis 10¹⁴ Ohm*m, bevorzugt von 10⁸ bis 10¹² Ohm*m bestimmt nach IEC 60093 aufweisen, oder zur Herstellung von Formkörpern aus diesen Kunststoff-Formmassen, wobei der mindestens eine Kunststoff der Kohlenstofffaser-Beschichtung ausgewählt ist aus einer Gruppe bestehend aus Polyamiden, insbesondere Copolyamiden, Polyestern, insbesondere Copolyestern, Polyurethanen, Epoxidharzen, Polyhydroxyethern, Acryl-Copolymeren, und Mischungen oder übereinanderliegenden Schichten aus zwei oder mehreren dieser Kunststoffe, und wobei die Kunststoff-Formmassen eine Matrix umfassen gebildet aus mindestens einem Kunststoff, der ein Thermoplast ausgewählt aus der Gruppe bestehend aus Acetalharzen, flüssigkristallinen Polymeren, Polyacrylaten, Polymethacrylaten, olefinischen und cycloolefinischen Polymeren, Polyamiden, Polyamidelastomeren, insbesondere Polyesteramiden, Polyetheramiden und Polyetheresteramiden, Polyamidimiden, Polyethern, Polyarylethern beeinhaltend Polyphenylether, Polyhydroxyethern, Polycarbonaten, Polysulfonen, Polyetherimiden, Polyimiden, Polyestern, Polyester-Polycarbonaten, Polyoxyethylenen, Polystyrolen, Styrol-Copolymeren, Polysulfonen, vinylischen Polymeren wie Polyvinylchlorid und Polyvinylacetat, und Mischungen oder Blends aus zwei oder mehreren der aufgezählten Thermoplaste, oder ein Duroplast ausgewählt aus der Gruppe bestehend aus Melaminharzen, Phenoplasten, Polyesterharzen, Aminoplasten, Epoxidharzen, Polyurethanen, vernetzten Polyacrylaten, und Mischungen oder Blends aus zwei oder mehreren der genannten Duroplaste ist.

## Claims

1. Plastic molding material, having the following composition:
(a) 49 to 97 wt.% of at least one plastic (A) forming a matrix,
(b) 3 to 40 wt.% of at least one carbon fiber coated with at least one plastic (B),
(c) 0 to 48 wt.% of at least one further additive (C),
wherein the components (a) to (c) add up to 100 wt.%,
**characterized in that** the carbon fiber of component (b) is selected from the group consisting of recycled carbon fibers and cellulose-based carbon fibers,
**that** the carbon fiber of component (b) has an average length in the range between 50 and 200 µm,
**that** the at least one plastic (B) of the carbon-fiber coating is selected from a group consisting of polyamides, in particular copolyamides, polyesters, in particular copolyesters, polyurethanes, epoxy resins, polyhydroxyethers, acrylic copolymers, and mixtures or superimposed layers of two or more of these plastics,
**that** the at least one plastic (A) of component (a) is a thermoplastic material selected from the group consisting of acetal resins, liquid-crystalline polymers, polyacrylates, polymethacrylates, olefinic and cycloolefinic polymers, polyamides, polyamide elastomers, in particular polyesteramides, polyetheramides and polyetheresteramides, polyamideimides, polyethers, polyaryl ethers including polyphenyl ethers, polyhydroxy ethers, polycarbonates, polysulfones, polyetherimides, polyimides, polyesters, polyester-polycarbonates, polyoxyethylenes, polystyrenes, styrene copolymers, polysulfones, vinyl polymers such as polyvinyl chloride and polyvinyl acetate, and mixtures or blends of two or more of the thermoplastics listed, or a thermoset selected from the group consisting of melamine resins, phenoplasts, polyester resins, aminoplasts, epoxy resins, polyurethanes, crosslinked polyacrylates, and mixtures or blends of two or more of the thermosets listed,
and **that** the plastic molding material has a surface resistivity of 1*10⁹ to 1*10¹⁶ ohms and a volume resistivity of 1*10¹ to 1*10¹⁴ ohms*m, both determined in accordance with IEC 60093.

2. Plastic molding material according to claim 1, **characterized in that** the carbon fiber of component (b) is coated with at least one plastic (B) which is selected from acrylic copolymers.

3. Plastic molding material according to claim 1, **characterized in that** the at least one plastic (A) is at least one polyamide, selected from the group consisting of PA 6; PA 46; PA 66; PA 66/6; PA 610; PA 612; PA 1010; PA 11; PA 12; PA MXD6; PA MXD10; PA MACM12; PA PACM12; PA 6T/6I; PA 6T/66; PA 6T/612; PA 6T/1012; PA 4T; PA 9T; PA 10T; PA 12T; PA 10/6T; PA 6T/6I/66; PA 11/10T; PA 12/10T; PA 610/10T; PA 612/10T; PA 1010/10T; PA 1012/10T; PA 1212/10T; PA 11/10T/12; PA 11/10T/6; PA 12/10T/6; PA 11/10T/10I; PA 11/10T/106; PA 12/10T/10I; PA 12/10T/106; polyamides based on a mixture of hexamethylene diamine and 2-methyl-pentamethylene diamine as the diamine component and terephthalic acid as the dicarboxylic acid component; polyamides whose diamine component is 4,4'-diaminocyclohexylmethane, 3,3'-dimethyl-4,4'-diaminocyclohexylmethane, cyclohexyldiamine, or 2,2',6,6'-tetramethyl-4,4'-methylenebis-(cyclohexylamine), and mixtures or blends of two or more of these polyamides.

4. Plastic molding material according to one of the preceding claims,
**characterized in that** the carbon fiber of component (b) is a recycled carbon fiber.

5. Plastic molding material according to one of the preceding claims,
**characterized in that** the proportion of carbon fiber is 4 to 35 wt.%, preferably 5 to 30 wt.% and particularly preferably 6 to 25 wt.%.

6. Plastic molding material according to one of the preceding claims,
**characterized in that** the at least one plastic (B) used for coating the carbon fiber amounts to 0.1 to 10 wt.%, preferably 0.5 to 5 wt.% and particularly preferably 1 to 2 wt.% relative to the total mass of the coated carbon fiber.

7. Plastic molding material according to one of the preceding claims,
**characterized in that** its surface resistivity is 1*10¹⁰ to 1*10¹⁴ ohms.

8. Plastic molding material according to one of the preceding claims,
**characterized in that** its volume resistivity is 1*10⁸ to 1*10¹² ohms*m.

9. Plastic molding material according to one of the preceding claims,
**characterized in that** the at least one further additive (C) of component (c) is selected from a group consisting of UV absorbers, UV stabilizers, heat stabilizers, hydrolysis stabilizers, crosslinking activators, crosslinking agents, flame retardants, phyllosilicates, fillers, colorants, reinforcing agents, adhesion promoters, impact modifiers, lubricants, glass beads, glass fibers, mineral powders, lubricant and demolding aids, inorganic pigments, organic pigments, IR absorbers, antistatic agents, antiblocking agents, nucleating agents, crystallization accelerators, crystallization retarders, chain-extending additives, optical brighteners, photochromic additives, and mixtures of two or more of these additives.

10. Plastic molding material according to one of the preceding claims,
**characterized in that** the proportion of the at least one further additive (C) is 0.01 to 45 wt.%, preferably 0.5 to 35 wt.% and particularly preferably 1.0 to 20 wt.%.

11. Plastic molding material according to one of the preceding claims,
**characterized in that** the elongation at break in the dry state determined according to ISO 527 is 0.7 to 6.0 %, preferably 1.0 to 5.0 % and particularly preferably 1.3 to 3.0 %.

12. Molded body which consists at least in sections of a plastic molding material according to one of claims 1 to 11, preferably in the form of a component for the electrical/electronic sector, in particular for parts of printed circuit boards, housings, foils, leads, switches, distributors, relays, resistors, capacitors, coils, lamps, diodes, LEDs, transistors, connectors, controllers, memories and sensors and housing or housing parts of mobile telephones, smartphones, tablet PCs, laptops, notebooks and netbooks.

13. Use of carbon fibers coated with at least one plastic, selected from the group consisting of recycled carbon fibers and cellulose-based carbon fibers, as additives in the manufacture of plastic molding materials, with an average length of the carbon fibers in the plastic molding materials in the range between 50 and 200 µm, wherein said plastic molding materials have a volume resistivity of 10⁷ to 10¹⁴ ohms*m, preferably from 10⁸ to 10¹² ohms*m determined according to IEC 60093, or for the production of molded bodies from these plastic molding materials, wherein the at least one plastic of the carbon fiber coating is selected from a group consisting of polyamides, in particular copolyamides, polyesters, in particular copolyesters, polyurethanes, epoxy resins, polyhydroxyethers, acrylic copolymers, and mixtures or superimposed layers of two or more of these plastics, and wherein the plastic molding materials comprise a matrix formed from at least one plastic comprising a thermoplastic material selected from the group consisting of acetal resins, liquid crystalline polymers, polyacrylates, polymethacrylates, olefinic and cycloolefinic polymers, polyamides, polyamide elastomers, in particular polyesteramides, polyetheramides and polyetheresteramides, polyamideimides, polyethers, polyarylethers including polyphenylethers, polyhydroxyethers, polycarbonates, polysulfones, polyetherimides, polyimides, polyesters, polyester-polycarbonates, polyoxyethylenes, polystyrenes, styrene copolymers, polysulfones, vinyl polymers such as polyvinyl chloride and polyvinyl acetate, and mixtures or blends of two or more of the thermoplastic materials listed, or a thermoset selected from the group consisting of melamine resins, phenoplasts, polyester resins, aminoplasts, epoxy resins, polyurethanes, crosslinked polyacrylates, and mixtures or blends of two or more of said thermosets.

## Revendications

1. Matière plastique de moulage ayant la composition suivante :
(a) de 49 à 97 % en poids d'au moins une matière plastique (A) formant une matrice,
(b) de 3 à 40 % en poids d'au moins une fibre de carbone recouverte au moins d'une matière plastique (B),
(c) de 0 à 48 % en poids d'au moins un autre additif (C),
les composants (a) à (c) se complétant à 100 % en poids,
**caractérisée en ce que** la fibre de carbone du composant (b) est choisie à partir du groupe composé de fibres de carbone recyclées et de fibres de carbone à base de cellulose,
**en ce que** la fibre de carbone du composant (b) présente une longueur moyenne comprise entre 50 et 200 µm,
**en ce que** la au moins une matière plastique (B) du revêtement des fibres de carbone est choisie à partir d'un groupe composé de polyamides, en particulier de copolyamides, de polyesters, en particulier de copolyesters, de polyuréthanes, résines époxy, polyhydroxyéthers, copolymères acryliques, et des mélanges ou des couches superposées de deux ou plus de ces matières plastiques,
**en ce que** la au moins une matière plastique (A) du composant (a) est un thermoplastique choisi à partir du groupe composé de résines acétal, de polymères liquides cristallins, polyacrylates, polyméthacrylates, polymères oléfiniques et cyclooléfiniques, polyamides, élastomères polyamides, en particulier des polyesteramides, des polyétheramides et des polyétherestéramides, polyamide-imides, polyéthers, des polyaryléthers en ce compris des polyphényléthers, des polyhydroxyéthers, polycarbonates, polysulfones, polyétherimides, polyimides, polyesters, polycarbonates de polyester, polyoxyéthylènes, polystyrènes, copolymères de styrène, polysulfones, polymères vinyliques comme le polychlorure de vinyle et le polyacétate de vinyle, et des mélanges de deux ou plus des thermoplastiques mentionnés, ou un duroplaste choisi à partir du groupe composé de résines de mélamine, phénoplastes, résines de polyester, aminoplastes, résines époxy, polyuréthanes, polyacrylates réticulés, et des mélanges de deux ou plus des duroplastes mentionnés, et **en ce que** la matière plastique de moulage présente une résistance de surface comprise entre 1*10⁹ et 1*10¹⁶ ohms et une résistance de volume spécifique de 1*10⁷ à 1*10¹⁴ ohms*m, les deux étant déterminées conformément à la norme IEC 60093.

2. Matière plastique de moulage selon la revendication 1, **caractérisée en ce que** la fibre de carbone du composant (b) est recouverte d'au moins une matière plastique (B) qui est choisie à partir de copolymères acryliques.

3. Matière plastique de moulage selon la revendication 1, **caractérisée en ce que** la au moins une matière plastique (A) est au moins un polyamide, choisi à partir du groupe composé de PA 6 ; PA 46 ; PA 66 ; PA 66/6 ; PA 610 ; PA 612 ; PA 1010 ; PA 11 ; PA 12 ; PA MXD6 ; PA MXD10 ; PA MACM12 ; PA PACM12 ; PA 6T/6I ; PA 6T/66 ; PA 6T/612 ; PA 6T/1012 ; PA 4T ; PA 9T ; PA 10T ; PA 12T ; PA 10/6T : PA 6T/6I/66 ; PA 11/10T ; PA 12/10T ; PA 610/10T ; PA 612/10T ; PA 1010/10T ; PA 1012/10T ; PA 1212/10T ; PA 11/10T/12 ; PA 11/10T/6 ; PA 12/10T/6 ; PA 11/10T/10I ; PA 11/10T/106 ; PA 12/10T/10I ; PA 12/10T/106 ; des polyamides à base d'un mélange de hexaméthylènediamine et 2-méthylpentaméthylènediamine comme composants diamine et de l'acide téréphtalique comme composant d'acide dicarboxylique ; des polyamides dont l'élément diamine est 4,4'-diamino-cyclohexylméthane, 3,3'-diméthyl-4,4'-diaminocyclohexylméthane, cyclohexyldiamine, ou 2,2',6,6'-tétraméthyl-4,4'-méthylènbis-(cyclohexylamine) et des mélanges de deux ou plus de ces polyamides.

4. Matière plastique de moulage selon l'une des revendications précédentes, **caractérisée en ce que** la fibre de carbone des composants (b) est une fibre de carbone recyclée.

5. Matière plastique de moulage selon l'une des revendications précédentes, **caractérisée en ce que** la part de la fibre de carbone est de 4 à 35 % en poids, de préférence de 5 à 30 % en poids, et de façon particulièrement préférée de 6 à 25 % en poids.

6. Matière plastique de moulage selon l'une des revendications précédentes, **caractérisée en ce que** la au moins une matière plastique (B) utilisée pour le revêtement de la fibre carbone représente de 0,1 à 10 % en poids, de préférence de 0,5 à 5 % en poids et de façon particulièrement préférée de 1 à 2 % en poids par rapport à la masse totale de la fibre de carbone recouverte.

7. Matière plastique de moulage selon l'une des revendications précédentes, **caractérisée en ce que** sa résistance de surface spécifique est de 1*10¹⁰ à 1*10¹⁴ ohms.

8. Matière plastique de moulage selon l'une des revendications précédentes, **caractérisée en ce que** sa résistance de volume spécifique est de 1*10⁸ à 1*10¹² ohms*m.

9. Matière plastique de moulage selon l'une des revendications précédentes, **caractérisée en ce que** le au moins un autre additif (C) du composant (c) est choisi à partir d'un groupe composé d'absorbeurs UV, de stabilisateurs UV, stabilisateurs thermiques, stabilisateurs d'hydrolyse, activateurs de réticulation, agents de réticulation, retardateurs de flamme, silicates lamellaires, agents de charge, colorants, agents de renforcement, agents adhésifs, agents modifiant la résistance aux chocs, lubrifiants, billes de verre, fibres de verre, poudres minérales, agents lubrifiants et démoulants, pigments inorganiques, pigments organiques, absorbeurs infrarouges, agents antistatiques, agents anti-bloquants, agents de nucléation, accélérateurs de cristallisation, retardateurs de cristallisation, additifs allongeant la chaîne, agents d'azurage optiques, additifs photochromiques, et des mélanges de deux ou plus de ces additifs.

10. Matière plastique de moulage selon l'une des revendications précédentes, **caractérisée en ce que** la part du au moins un autre additif (C) est comprise entre 0,01 et 45 % en poids, de préférence entre 0,5 et 35 % en poids, et de façon particulièrement préférée entre 1,0 et 20 % en poids.

11. Matière plastique de moulage selon l'une des revendications précédentes, **caractérisée en ce que** l'allongement à la rupture à l'état sec déterminé selon la norme ISO 527 est de 0,7 à 6,0 %, de préférence de 1,0 à 5,0 % et de façon particulièrement préférée de 1,3 à 3,0 %.

12. Corps moulé composé au moins par endroits d'une matière plastique de moulage selon l'une des revendications 1 à 11, de préférence sous la forme d'un composant pour le domaine électrique/électronique, en particulier pour des éléments de circuits imprimés, boîtiers, films, câbles, commutateurs, distributeurs, relais, résistances, condensateurs, bobines, lampes, diodes, LED, transistors, connecteurs, régulateurs, accumulateurs et capteurs et boîtiers ou parties de boîtiers de téléphones mobiles, smartphones, tablettes, ordinateurs portables, Notebooks et Netbooks.

13. Utilisation de fibres de carbone recouvertes d'au moins une matière plastique choisies à partir du groupe composé de fibres de carbone recyclées et de fibres de carbone à base de cellulose, comme additif pour la fabrication de matières plastiques de moulage, avec une longueur moyenne des fibres de carbone dans les matières plastiques de moulage dans la plage comprise entre 50 et 200 µm, ces matières plastiques de moulage présentant une résistance de volume spécifique de 10⁷ à 10¹⁴ ohms*m, de préférence de 10⁸ à 10¹² ohms*m déterminée selon la norme IEC 60093, ou pour la fabrication de corps moulés à partir de ces matières plastiques de moulage, la au moins une matière plastique du revêtement des fibres de carbone étant choisie parmi un groupe composé de polyamides, en particulier de copolyamides, de polyesters, en particulier de copolyesters, de polyuréthanes, résines époxy, polyhydroxyéthers, copolymères acryliques, et des mélanges ou des couches superposées de deux ou plus de ces matières plastiques, et dans laquelle les matières plastiques de moulage comprennent une matrice formée à partir d'au moins une matière plastique qui est un thermoplastique choisi à partir du groupe composé de résines acétal, de polymères liquides cristallins, polyacrylates, polyméthacrylates, polymères oléfiniques et cyclooléfiniques, polyamides, élastomères de polyamide, en particulier des polyesteramides, des polyétheramides et des polyétherestéramides, polyamide-imides, polyéthers, des polyaryléthers en ce compris des polyphényléthers, des polyhydroxyéthers, polycarbonates, polysulfones, polyétherimides, polyimides, polyesters, polycarbonates de polyester, polyoxyéthylènes, polystyrènes, copolymères de styrène, polysulfones, polymères vinyliques comme le polychlorure de vinyle et le polyacétate de vinyle, et des mélanges de deux ou plus des thermoplastiques mentionnés, ou un duroplaste choisi à partir du groupe composé de résines de mélamine, phénoplastes, résines de polyester, aminoplastes, résines époxy, polyuréthanes, polyacrylates réticulés, et des mélanges de deux ou plus des duroplastes mentionnés.
